(19) Europäisches Patentamt
European Patent Office
Office européen des brevets

(11) **EP 3 295 464 B1**

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(51) Int Cl.:
*H01F 17/06* (2006.01)  *H01F 27/25* (2006.01)
*H01F 38/02* (2006.01)  *H02M 1/00* (2006.01)

(21) Anmeldenummer: **16738658.0**

(22) Anmeldetag: **11.05.2016**

(86) Internationale Anmeldenummer:
**PCT/DE2016/100216**

(87) Internationale Veröffentlichungsnummer:
**WO 2016/180406 (17.11.2016 Gazette 2016/46)**

(54) **WANDLERVORRICHTUNG**

CONVERTER DEVICE

DISPOSITIF CONVERTISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.05.2015 DE 102015107294**

(43) Veröffentlichungstag der Anmeldung:
**21.03.2018 Patentblatt 2018/12**

(73) Patentinhaber: **Technische Hochschule Köln
50968 Köln (DE)**

(72) Erfinder: **DICK, Christian
50354 Hürth (DE)**

(74) Vertreter: **Ostermann, Thomas
Fiedler, Ostermann & Schneider
Patentanwälte
Klausheider Strasse 31
33106 Paderborn (DE)**

(56) Entgegenhaltungen:
**DE-A1- 10 161 907      DE-A1-102013 202 712
US-A1- 2011 279 212**

**Beschreibung**

Die Erfindung betrifft eine Wandlervorrichtung mit einem Wandler und mit einer Spulenanordnung enthaltend eine Anzahl von Spulen.

Aus der DE 10 2012 206 225 A1 ist eine Spule mit einem niederpermeablen Ringbandkern bekannt, der aus einem weichmagnetischen nanokristallinen Material besteht. Eine Wicklung der Spule ist durch eine Kernöffnung des Ringbandkernes geführt. Um die Performance der Spule, und insbesondere das Volumen derselben zu reduzieren, weist der Ringbandkern der bekannten Spule Bereiche mit unterschiedlicher Permeabilität auf. Der Ringbandkern ist derart aufgebaut, dass die Permeabilität radial nach außen hin zunimmt. Die Performanceverbesserung der bekannten Spule wird allerdings mit einem erhöhten Herstellungsaufwand erkauft, denn die Spule setzt sich aus materialunterschiedlichen Kernringen zusammen.

Aus der DE 101 61 907 A1 ist ein Herstellungsverfahren für nanokristalline Ringbandkerne offenbart.

Aus der DE 30 30 225 A1 ist eine Trennschaltung für einen Gleichstrommotor bekannt, mittels dessen ein zu einer Ankerspannung des Motors proportionales Ausgangssignal erzeugt werden soll. Hierzu ist ein Transformator vorgesehen, der aus einem inneren und einem äußeren Ringkern besteht und um den mehrere Wicklungen gewickelt sind. Neben einer Primär- und Sekundärwicklung sind Wicklungen vorgesehen, über die Verstärker gekoppelt sind. Hierdurch soll die Welligkeitsfrequenz symmetrisch und leicht filterbar gemacht bzw. die Umschaltung einer bistabilen Schaltung gesteuert werden.

Aus der DE 10 2012 109 420 A9 ist ein Wechselrichter mit zwei DC/DC-Wandlern bekannt, die für unterschiedliche Speicherzwecke getrennt auswählbar sind. Als eine passive Schalteinrichtung zur Auswahl des einen oder des anderen DC/DC-Wandlers sind die beiden DC/DC-Wandler durch eigene Stromdrosseln sowie einer gemeinsamen Speicherdrossel voneinander entkoppelt.

Aus der US 2011/0279212 A1 ist eine Wandlervorrichtung mit einem Wandler und mit einer Spulenanordnung enthaltend eine Anzahl von Spulen bekannt, bei der die Spulen eine Form aufweisen, mittels derer eine Welligkeit des Stromes reduziert werden kann.

Aus der DE 10 2013 202 712 A1 ist eine Wandlervorrichtung mit einem Wandler und mit einer Spulenanordnung enthaltend eine Anzahl von Spulen bekannt. Die Wandlervorrichtung ist als ein Multiphasenwandler ausgebildet, bei der jede Phase mindestens zwei Windungen zugeordnet sind. Durch gezielte Einbringung eines magnetischen Streuflusses kann die Kopplung der Phasen verringert werden, so dass eine Reduzierung der Verlustleistung erzielt werden kann.

Aufgabe der vorliegenden Erfindung ist es, eine Wandlervorrichtung sowie eine Spulenanordnung mit Ringkernen versehenen Spulen derart weiterzubilden, dass die Performance der Spule weiter verbessert wird, insbesondere soll das Volumen der Spule verringert bzw. Material eingespart werden.

Zur Lösung dieser Aufgabe weist die Erfindung die Merkmale des Patentanspruchs 1 auf.

Die Erfindung sieht die Kopplung von mindestens zwei unterschiedlichen Spulen bzw. Wicklungen vor, die über einen Koppelringkern, insbesondere eines Koppelringbandkernes, miteinander gekoppelt sind. Mittels einer Steuer-/Regeleinrichtung werden die Wicklungen der Spulen derart angesteuert, dass sich die Gleichstromanteile der entgegengesetzt durch eine Kernöffnung des Koppelringkernes, insbesondere des Koppelringbandkernes, fließenden Stromes ausgleichen. Werden zwei Wicklungen eingesetzt, wird der mittlere Strom der beiden Wicklungen betragsmäßig auf einem gleichen Wert bzw. innerhalb eines relativ engen Stromstärkebandes gehalten. Folglich ermöglicht die Erfindung, dass der weichmagnetische Kern für den Koppelfluss frei von DC-Anteilen ist. Im Vergleich zu einer einphasigen Spulenanordnung kann mehr als 60 % des Kernmaterials frei von Gleichstrom-Flüssen gehalten werden. Die mehrphasige Spulenanordnung nach der Erfindung eignet sich somit vorzugsweise für Schaltungen mit relativ hohen Gleichstromanteilen.

Nach einer bevorzugten Ausführungsform der Erfindung besteht die Spulenanordnung aus zwei Wicklungen, die jeweils durch die Kernöffnung des Koppelringkernes, insbesondere des Koppelringbandkernes, und zusätzlich durch eine Kernöffnung eines Einzelringkernes, insbesondere eines Einzelringbandkernes, geführt gelagert sind. Die beiden Wicklungen sind gegensinnig bestromt bezüglich des Koppelringkernes, insbesondere des Koppelringbandkernes. Es ergibt sich hierdurch ein relativ einfacher und symmetrischer Aufbau der Spulenanordnung. Die Spulenanordnung kann eine geradzahlige oder eine ungeradzahlige Anzahl von Wicklungen aufweisen. Wesentlich ist, dass die Ströme der Wicklungen so angesteuert sind, dass sich ihre Gleichstromanteile zu einem relativ niedrigen resultierenden Gesamtstrom überlagern. Wenn der Gleichanteil des durch eine erste Wicklung fließenden ersten Stroms gleich ist zu einem Gleichanteil eines durch die zweite Wicklung fließenden zweiten Stroms, orientiert in der kompensierenden Richtung, dann ist der ist der resultierende Gesamtstrom frei von Gleichanteilen. Hierdurch kann eine maximale Materialersparnis erzielt werden. Es ist aber auch akzeptabel, wenn eine leichte Unsymmetrie bei den Gleichstromanteilen besteht, wobei vorzugsweise der Gleichanteil des ersten Stromes betragsmäßig gleich oder betragsmäßig mit einer Abweichung von maximal 30 % zu den betragsmäßigen zweiten Strom aufweist.

Nach einer Weiterbildung der Erfindung haben der Koppelringkern sowie jeder einzelne Einzelringkern i.A. voneinander unterschiedliche Permeabilitäten. Die unsymmetrischen oder im Spezialfall auch symmetrischen Eigenschaften bzgl. der Wicklungen werden für entsprechende Anwendungen genutzt. Auch der Aufbau der elektrischen Wicklungen muss nicht identisch/symmetrisch erfolgen.

Nach einer Weiterbildung der Erfindung können die Wicklungen der Spulen auch durch Kernöffnungen mehrerer Koppelringkerne geführt angeordnet sein. Hierdurch kann die Reluktanz des gekoppelten magnetischen Flusses verändert werden. Dadurch, dass den Wicklungen jeweils mehrere Koppelringkerne zugeordnet sind, können externe Streufelder reduziert werden.

Nach einer Weiterbildung der Erfindung sind der Koppelringkern und der Einzelringkern aus einem weichmagnetischen Band gewickelt und weisen eine jeweils in sich homogene Permeabilitätsverteilung auf. Vorteilhaft können hierdurch die Kerne einfach hergestellt werden. Vorteilhaft ermöglicht das Material den Einsatz der Spulen in einem relativ großen Frequenzbereich, beispielsweise in einem Frequenzbereich zwischen 100 kHz und 500 kHz. Aufgrund der geringen Permeabilität ist die Wirbelstromgrenzfrequenz relativ hoch.

Nach einer Weiterbildung der Erfindung bestehen der Koppelringbandkern und der Einzelringbandkern aus einer nanokristallinen Fe-Cu-Si-B-Nb-Legierung. Die Teilchengröße kann 100 nm oder weniger betragen.

Nach einer Weiterbildung der Erfindung ist das Band des Koppelringbandkernes und des Einzelringbandkernes wärmebehandelt, wobei es in Längsrichtung so gezogen worden ist, dass sich die gewünschte Permeabilität des Bandes eingestellt hat. Durch Anwenden einer Zugspannung kann vorteilhaft die Permeabilität des Materials verringert werden.

Nach einer Weiterbildung der Erfindung ist lediglich einer der beiden Wicklungen der Einzelringkern zugeordnet. Die andere Wicklung weist keinen Einzelringkern auf und erstreckt sich nur durch die Kernöffnung des Koppelringernes.

Nach einer Weiterbildung der Erfindung ist ein Koppelringkern vorgesehen mit einer Kernöffnung, durch die mindestens zwei Wicklungen geführt sind. Einer ersten Wicklung ist kein Einzelringkern zugeordnet. Einer einer zweiten Wicklung ist ein Einzelringkern zugeordnet. Die zweite Wicklung ist stromlos oder stromdurchflossen schaltbar ist, so dass eine Induktivität der ersten Wicklung veränderbar ist zwischen einer ersten Induktivität, in der die zweite Wicklung offen ist, und einer zweiten Induktivität, in der die zweite Wicklung stromdurchflossen ist. Vorteilhaft wird hierdurch eine schaltbare und diskret einstellbare Induktivität geschaffen. Die eine Wicklung, die nicht durch die Kernöffnung des Einzelringkernes geführt ist, dient als Lastwicklung, während die andere Wicklung, die durch die Öffnung des Einzelringkernes geführt ist, als Schaltwicklung dient. Je nachdem, ob die Schaltwicklung kurz geschlossen oder unterbrochen ist, wird eine unterschiedliche Induktivität über den Koppelringkern eingestellt, die sich auf einen Laststromkreis auswirkt, in dem sich die Lastwicklung befindet.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:

Fig. 1 eine Spannungsreglerschaltung mit integrierter erfindungsgemäßer Spulenanordnung,

Fig. 2 ein magnetisches Ersatzschaltbild der Spulenanordnung,

Fig. 3 eine Spulenanordnung nach einer zweiten Ausführungsform,

Fig. 4 eine Spulenanordnung nach einer dritten Ausführungsform,

Fig. 5 eine Spulenanordnung nach einer vierten Ausführungsform,

Fig. 6 eine Spulenanordnung nach einer fünften Ausführungsform,

Fig. 7 eine schematische Darstellung einer einer alternativen Wandlervorrichtung und

Fig. 8 eine Spulenanordnung gemäß der Ausführungsform nach Figur 7.

Eine erfindungsgemäße Spulenanordnung wird vorzugsweise in elektronischen Steuergeräten, vorzugsweise in Spannungsreglerschaltungen eingesetzt. Vorzugsweise wird die Spulenanordnung zur Bereitstellung von Speisespannungen (Point of Load bzw. Voltage Regulartor Module) auf Ferritbasis für den kleinen Leistungsbereich eingesetzt. Hierdurch ergibt sich eine hohe Materialersparnis sowie eine hohe Regelbandbreite.

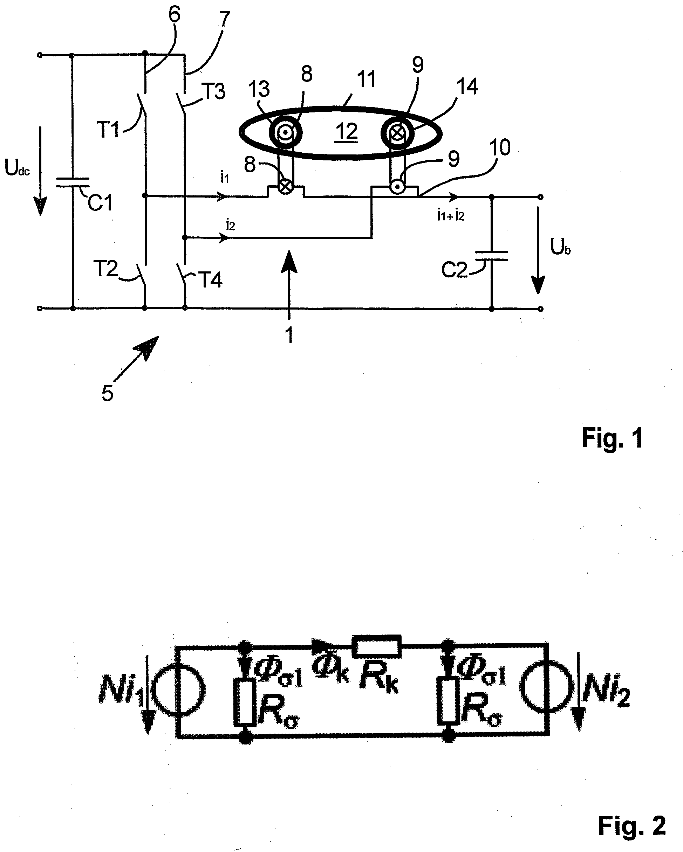

Nach einer bevorzugten Ausführungsform gemäß Figur 1 ist eine Spulenanordnung 1 in einem Spannungsregler 5 (Spannungsreglerschaltung) integriert angeordnet. Die Spulenanordnung 1 weist Ringkerne auf. Der Spannungsregler 5 ermöglicht eine Reduzierung der an einem ersten Kondensator C1 anliegenden Gleichspannung $U_{dc}$ auf eine niedrigere Spannung $U_b$, die an einem ausgangsseitigen Kondensator C2 anliegt. Beispielsweise kann die Ausgangsspannung $U_b$ = 2 Volt betragen. Da die eisenbasierten Legierungen einer deutlich vergrößerten Belastung Stand halten können, werden in einer weiteren bevorzugten Ausführungsform signifikant erhöhte Leistungen übertragen. Entsprechend kann die Ausgangsspannung beispielsweise $U_b$ = 50 Volt betragen.

In Figur 1 ist eine Spannungsreglerschaltung 5 (Gleichspannungswandler) dargestellt, der einen zu dem Eingangskondensator C1 parallel verlaufenden ersten Schaltzweig 6 enthaltend die Transistoren T1 und T2 sowie einen zu dem Eingangskondensator C1 parallel verlaufenden zweiten Schaltzweig 7 enthaltend Transistoren T3 und T4 aufweist. Zwischen den Transistoren T1 und T2 des ersten Zweigs 6 ist eine erste Wicklung 8 der Spulenanordnung 1 angeschlossen, wobei ein Strom $i_1$ über die erste Wicklung 8 zu dem Ausgangskondensator C2 fließt. Zwischen dem dritten Transistor T3 und dem vierten Transistor T4 des zweiten Zweiges 7 ist eine zweite Wicklung 9 der Spulenanordnung 1 angeschlossen, wobei ein Strom $i_2$ zu dem Ausgangskondensator C2 fließt. Erste Anschlussstellen der ersten Wicklung 8 und der zweiten Wicklung 9 befinden sich in dem ersten Schaltzweig 6 zwischen den Transistoren T1 und T2 bzw. in dem zweiten Schaltzweig 8 zwischen den Transistoren T3 und T4. Zweite Anschlüsse der ersten Wicklung 8 und der zweiten Wicklung 9 befinden sich an einem gemeinsamen Verbindungspunkt 10, so dass ein Summenstrom $i_1 + i_2$ aus dem durch die erste Wicklung 8 fließenden Strom $i_1$ und des durch die zweite Wicklung 9 fließenden zweiten Stroms $i_2$ zu dem Ausgangskondensator C2 geleitet wird.

Die erste Wicklung 8 und die zweite Wicklung 9 sind über einen als Koppelringbandkern 11 ausgebildeten Koppelringkern miteinander gekoppelt. Zu diesem Zweck verlaufen die erste Wicklung 8 und die zweite Wicklung 9 durch eine gemeinsame Kernöffnung 12 des Koppelringbandkernes 11.

Der ersten Wicklung 8 ist ein als erster Einzelringbandkern 13 ausgebildeter Einzelringkern und der zweiten Wicklung 9 ein als zweiter Einzelringbandkern 14 ausgebildeter Einzelringkern zugeordnet. Eine Kernöffnung des ersten Einzelringbandkernes 13 und des zweiten Einzelringbandkernes 14 verläuft innerhalb der Kernöffnung 12 des Koppelringbandkernes 11.

Eine nicht dargestellte Steuer-/Regeleinrichtung steuert die schaltenden Transistoren T1, T2, T3, T4 so an, dass ein Koppelfluss $\Phi_k$ frei von Gleichstrom-Flüssen ist. In Figur 1 ist die Richtung der Ströme $i_1$ und $i_2$ der beiden Wicklungen 8 und 9 entgegengesetzt eingezeichnet (siehe Punkt/Kreuzdarstellung). Damit im Vergleich zur ersten Wicklung 8 durch die zweite Wicklung 9 ein entgegengesetzter Strom $i_2$ verläuft, können die Transistoren T1 und T4 bzw. T2 und T3 wechselweise durchgeschaltet werden.

Die erste Wicklung 8 und die zweite Wicklung 9 können eine Mehrzahl von N-Windungen aufweisen. Mittels der Einzelringbandkerne 13, 14 ergeben sich Streureluktanzen $R_\sigma$. Mittels des Koppelringbandkernes 11 ergibt sich eine Koppelreluktanz $R_k$, die bei symmetrischen Strömen $i_1$, $i_2$ keinen Gleichanteil aufweist. In Figur 2 ist ein entsprechendes magnetisches Ersatzschaltbild der Spulenanordnung 1 dargestellt.

Aufgrund der erfindungsgemäßen Kopplung von mindestens zwei Wicklungen 8, 9, deren Ströme $i_1$, $i_2$ so angesteuert werden, dass sich Gleichstromanteile der Ströme $i_1$, $i_2$ ausgleichen bzw. bis auf einen geringen Gleichstromanteil ausgleichen, kann mehr als 60 % des Kernmaterials frei von Gleichstromflüssen gehalten werden. Dies wirkt sich insbesondere positiv auf Schaltungen mit hohen Gleichstromanteilen aus. Mittels der Steuer-/Regeleinrichtung werden der durch die erste Wicklung 8 fließende Strom $i_1$ und der durch die zweite Wicklung 9 fließende Strom $i_2$ annähernd auf gleichen mittleren Strombetrag gehalten. Da die Ströme $i_1$ und $i_2$ entgegengesetzt gerichtet sind, gleichen sich die Gleichstromanteile der Ströme $i_1$ und $i_2$ aus. Der weichmagnetische Kern 11 für den magnetischen Koppelfluss ist frei von magnetischen Gleichstrom-Flüssen.

Der Koppelringbandkern 11 sowie die Einzelringbandkerne 13, 14 bestehen vorzugsweise aus einem nanokristallinen FE-Cu-Si-B-Nb-Legierung. Der Koppelringbandkern 11 sowie die Einzelringbandkerne 13, 14 bestehen aus einem wärmebehandelten Band, das in Längsrichtung so gezogen worden ist, dass mittels der Zugkraft die gewünschte Permeabilität des Bandes bzw. des Koppelringbandkernes 11 sowie der Einzelringbandkerne 13, 14 eingestellt werden kann. Die Bänder werden jeweils kontinuierlich in eine Durchlaufglühanlage eingeleitet und von dieser zu weichmagnetischen Material verarbeitet. Der Koppelringbandkern 11 sowie die Einzelringbandkerne 13, 14 bestehen aus einem gewickelten weichmagnetischen Band, das eine homogene Permeabilitätsverteilung aufweist. Insbesondere verläuft die Permeabilität in radialer Richtung konstant. Vorteilhaft ergibt sich aufgrund der Materialeigenschaft eine Frequenzunabhängigkeit der Permeabilität, so dass die Spulenanordnung in einem Frequenzbereich zwischen 100 kHz und 500 kHz eingesetzt werden kann. Untersuchungen haben ergeben, dass sich die Verluste um einen Faktor fünf im Vergleich zu einem Ferritmaterial 3C96 verbessern lassen, wobei gleichzeitig sich die Sättigungsflussdichte um den Faktor drei vergrößern kann.

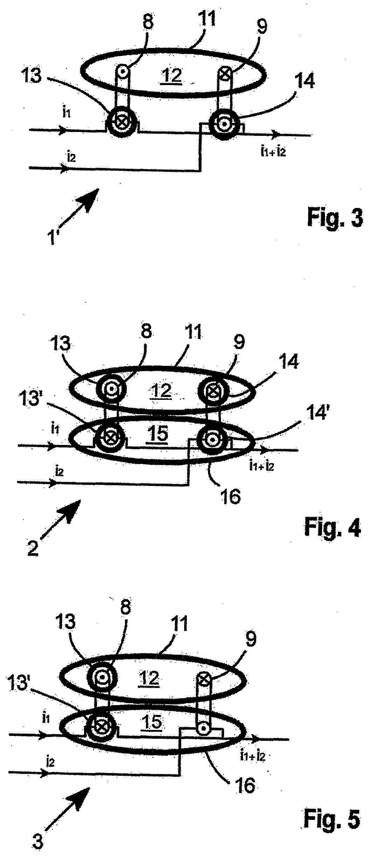

Nach einer zweiten Ausführungsform der Erfindung ist eine Spulenanordnung 1' in Figur 3 vorgesehen, die sich von der in Figur 1 dargestellten ersten Ausführungsform der Erfindung dadurch unterscheidet, dass ein der ersten Wicklung 8 zugeordneter Einzelringbandkern 13 und ein der zweiten Wicklung 9 zugeordneter zweiter Einzelringbandkern 14 außerhalb der Kernöffnung 12 des Koppelringbandkernes 11 angeordnet sind. Hinsichtlich der magnetischen Koppelwirkung zwischen der ersten Wicklung 8 und der zweiten Wicklung 9 ist diese Ausführungsform identisch zu der Ausführungsform gemäß Figur 1. Durch die örtlich getrennte Anordnung der Einzelringbandkerne 13, 14 zu dem Koppelringbandkern 11 weist die Spulenanordnung 1' einen einfachen Aufbau auf, der leichter zu fertigen ist.

Nach einer dritten Ausführungsform der Erfindung ist eine Spulenanordnung 2 in Figur 4 dargestellt, bei der im Unterschied zu der ersten Ausführungsform nach Figur 1 die erste Wicklung 8 und die zweite Wicklung 9 der ersten Spulenanordnung 1 zusätzlich durch eine weitere Kernöffnung 15 eines zweiten Koppelringbandkernes 16 geführt sind. Gegebenenfalls können noch weitere Koppelringbandkerne 15 vorgesehen sein zur Kopplung der ersten Wicklung 8 mit der zweiten Wicklung 9. Ein weiterer Unterschied zu der Spulenanordnung 1 besteht darin, dass sowohl der ersten Wicklung 8 als auch der zweiten Wicklung 9 mindestens zwei Einzelringbandkerne 13, 13' bzw. 14, 14' zugeordnet sind. Hierdurch kann die Streureluktanz $R_\sigma$ der beiden Wicklungen 8, 9 entsprechend verändert werden.

Gleiche Bauteile bzw. Bauteilfunktionen der Ausführungsbeispiele sind mit den gleichen Bezugsziffern versehen.

Die zweite Spulenanordnung 2 ermöglicht eine stärkere Kopplung zwischen der ersten Wicklung 8 und der zweiten Wicklung 9, was sich in einer reduzierten Koppelreluktanz $R_k$ auswirkt.

Nach einer weiteren Ausführungsform der Erfindung ist gemäß Figur 5 eine vierte Spulenanordnung 3 vorgesehen, bei der nur die erste Wicklung 8 mit einem ersten Einzelringbandkern 13 bzw. 13' versehen ist, während die zweite Wicklung 9 mit keinem Einzelringbandkern versehen ist. Es ergibt sich hiermit eine unsymmetrische Verteilung der Streureluktanzen $R_\sigma$.

Nach einer weiteren Ausführungsform der Erfindung ist eine Spulenanordnung 1 bzw. 2 gemäß Figur 1 bzw. 3 vorgesehen, in welcher die Einzelringbandkerne insbesondere unterschiedliche Permeabilitäten aufweist, was ebenso zu einer unsymmetrischen Verteilung der Streureluktanzen $R_\sigma$ führt.

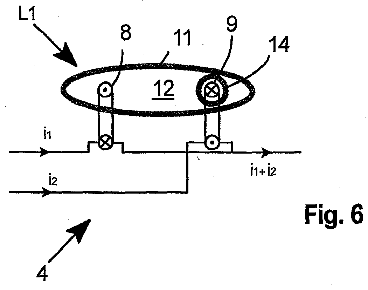

Nach einer weiteren Ausführungsform der Erfindung ist eine Spulenanordnung 4 gemäß Figur 6 vorgesehen, mittels derer eine Induktivität L1 des durch die erste Wicklung 8 fließenden Stroms $i_1$ gesteuert werden kann. Die erste Wicklung 8 ist über den Koppelringbandkern 11 mit der zweiten Wicklung 9 gekoppelt. Der zweiten Wicklung 9 ist lediglich der Einzelringbandkern 14 zugeordnet. Die erste Wicklung 8 weist keinen Einzelringbandkern auf.

Ist die zweite Wicklung 9 offen, weist die erste Wicklung 8 eine Ausgangsinduktivität auf. Wenn die zweite Wicklung 9 kurzgeschlossen ist, wobei der zweite Einzelringbandkern 14 niederpermeabel ist, dann führt die zweite Wicklung 9 einen energiespeichernden magnetischen Fluss, der zu einer veränderten Induktivität L1 der ersten Wicklung 8 führt. Es ergibt sich für die erste Wicklung 8 aufgrund der zwei Schaltzustände der zweiten Wicklung 9 die Einstellung von zwei unterschiedlichen Induktivitäten. Die erste Wicklung 8 befindet sich im Lastkreis. Die zweite Wicklung 9 befindet sich in einem Schaltkreis.

Die Erfindung ermöglicht aufgrund der geometrischen Anordnung von Ringbandkernen 11, 13, 13', 14, 14' in Bezug auf die erste Wicklung 8 und die zweite Wicklung 9 insbesondere ein Kompensieren von Gleichanteilen der magnetischen Flüsse der ersten Wicklung 8 und der zweiten Wicklung 9.

Nach einer nicht dargestellten Ausführungsform können auch mehr als zwei Wicklungen, beispielsweise drei, vier Wicklungen vorgesehen sein. Entsprechend der Erfindung sind die Wicklungen derart angesteuert, dass sich Gleichanteile der durch sie fließenden Ströme ausgleichen.

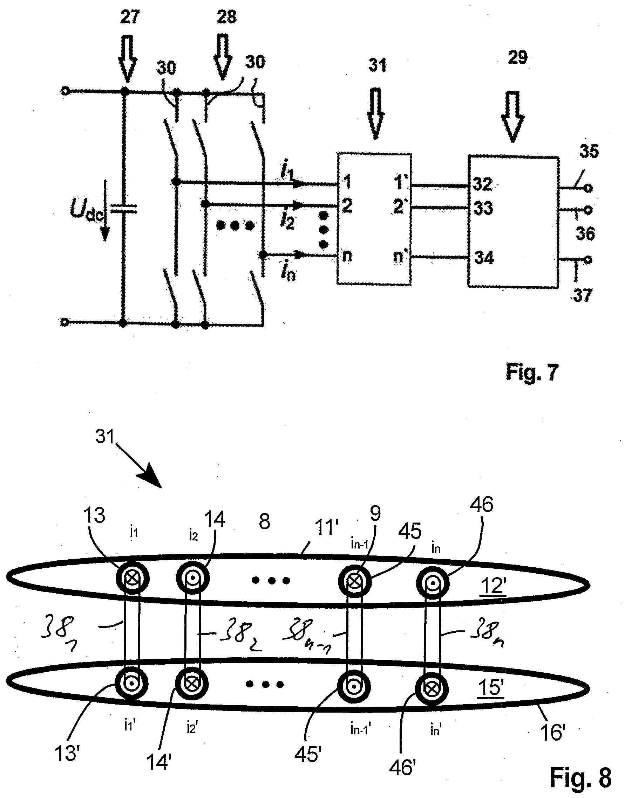

Nach einer weiteren Ausführungsform der Erfindung gemäß Figur 7 ist eine mehrphasige (n-phasige) Wandlervorrichtung vorgesehen, die einen Spannungszwischenkreis (Kondensator) 27, einen Wandler 28, einen Filter 29 (beispielsweise Filterkondensatoren enthaltend, möglicherweise mit Rückkopplung an den Zwischenkreis) sowie eine Spulenanordnung 31 aufweist. Die Spulenanordnung 31 unterscheidet sich von der Spulenanordnung 1 gemäß Figur 1 dadurch, dass sie nicht nur zwei Wicklungen, sondern mehrere, eine den Zweigen 30 des Wandlers 28 entsprechende Anzahl von Wicklungen aufweist. Die Spulenanordnung 31 weist somit n-Wicklungen auf. Ein weiterer Unterschied der Spulenanordnung 31 zu der in Figur 1 dargestellten Spulenanordnung 1 besteht darin, dass die Spule der Spulenanordnung 31 nicht zu einem gleichen Verbindungspunkt 10 zusammengeführt sind, also nicht auf den gleichen Potentialpunkt geführt sind. Stattdessen werden zweite Anschlüsse 1', 2', n' der Spulen gesondert mit Anschlüssen 32, 33, 34 der nachgeordneten Einheit, nämlich des Filters 29, verbunden. Im vorliegenden Ausführungsbeispiel wird davon ausgegangen, dass es sich um eine dreiphasige Wandlervorrichtung bzw. Wandler 28 handelt. Lastseitig ist das Filter 29 über Anschlüsse 35, 36, 37 mit einer Last, beispielsweise mit einem Netz (Automobilnetz), verbunden. Die Spulenanordnung 31 ist zwischen dem Wandler 28 und dem Filter 29 angeordnet. Es bildet sich zwischen dem Wandler 28 und der Spulenanordnung 31 ein Spannungszwischenkreis mit einer Zwischenkreisspannung aus, die vorzugsweise eingangsseitig der Spulenanordnung 31 phasenweise anliegt.

Wie aus Figur 8 ersichtlich ist, kann die Spulenanordnung 31 Wicklungen $38_1$, $38_2$, $38_{n-1}$, $38_n$ aufweisen, die zum einen durch eine gemeinsame Kernöffnung 12' eines ersten Koppelringbandkernes 11' und durch eine zweite Kernöffnung 15 eines zweiten Koppelringbandkernes 16' geführt angeordnet sind. Zusätzlich weisen die Wicklungen $38_1$, $38_2$, $38_{n-1}$, $38_n$ jeweils Einzelringbandkerne 13, 13' bzw. 14, 14' bzw. 45, 45', 46, 46' auf, wobei die jeweiligen ersten Einzelringbandkerne 13, 14, 45, 46 innerhalb des ersten Koppelringbandkerns 11' und die zweiten Einzelringbandkerne 13', 14', 45', 46' innerhalb des zweiten Koppelringbandkerns 16' verlaufen.

Die Wandlervorrichtung weist eine nicht dargestellte Steuer-/Regeleinrichtung mit einem Stromregler auf, der auf die Spulen mit den Wicklungen $38_1$, $38_2$, $38_{n-1}$, $38_n$ derart einwirkt, dass sich Gleichstromanteile von durch die Wicklungen $38_1$, $38_2$, $38_{n-1}$, $38_n$ der Spulen fließende Ströme $i_1$, $i_2$, $i_{n-1}$, $i_n$ ausgleichen bzw. zu Null werden oder einen relativ kleinen oder im Vergleich zu einem Nennstrom kleinen Wert aufweisen.

Beispielweise können die Ströme der Spulen im Mittel auf ein gleiches Niveau eingestellt werden. Im vorliegenden Ausführungsbeispiel gemäß Figur 7 kann beispielsweise eine Zwischenkreisspannung $U_{dc}$ des Spannungszwischenkreises 27 eingestellt werden. Beispielsweise kann für die Spulenströme gelten:

$$i_1 = i_2 = \ldots = i_n$$

und zwar für eine Wandlervorrichtung, die als eine Gleichspannungswandlervorrichtung (DC-DC-Wandler) ausgebildet ist. Hierbei wird davon ausgegangen, dass die Anzahl n der Zweige 30 bzw. der Ströme $i_1$, $i_2$... $i_n$ eine gerade Zahl ist.

Nach einer nicht dargestellten Ausführungsform der Erfindung kann eine Wandlervorrichtung vorgesehen sein, bei der die Summe der Ströme $i_1$, $i_2$... $i_n$ gleich Null oder nahe Null ist bzw. im Vergleich zum Nennstrom klein ist. Es kann sich beispielsweise um eine Wandlervorrichtung für eine dreiphasige Netzeinspeisung handeln. Im Falle dieser nicht dargestellten Ausführungsform würden die Ströme (z.B. die drei Phasenströme), im Gegensatz zu Figur 8, gleichsinnig durch den Koppelringbandkern (11' und/oder 16') geführt.

Nach einer nicht dargestellten alternativen Ausführungsform der Erfindung kann die Spulenanordnung eingesetzt werden in einer Wandlervorrichtung die einen Stromzwischenkreis (mit Stromquelle) aufweist, wobei mittels der Spulenanordnung ein Zwischenkreisstrom eingeprägt wird. Alternativ kann die Spulenanordnung eingesetzt werden in einer Wandlervorrichtung, die als eine Z-Source-Wandlervorrichtung (ZSI) ausgebildet ist, die eine Anzahl von Spulen und Kondensatoren aufweist, so dass die Eigenschaften einer Stromquellen-Wandlervorrichtung (CSI) und einer Spannungsquellen-Wandlervorrichtung (VSI) kombiniert werden,

Es versteht sich, dass die Spulenanordnung 31 eine in den Figuren 1 bis 5 dargestellte Kopplung der einzelnen Wicklungen aufweisen kann. Insbesondere kann die Konfiguration der Spulenanordnung 31 darin bestehen, dass die Anzahl der Spulen größer ist als zwei, sonst aber mit der Konfiguration gemäß den Figuren 1 bis 5 übereinstimmt, insbesondere an einer Ausgangsseite der Spulenanordnung 31 die Ströme an einem Verbindungspunkt zusammengeführt werden. In einer alternativen Ausführungsform werden diese Ströme nicht - wie in Figur 7 dargestellt - zusammengeführt.

Nach alternativen Ausführungsformen der Erfindung können statt der Einzelringbandkerne und Koppelringbandkerne auch Einzel- und Koppelringkerne vorgesehen sein, die jeweils durch Pressen von Pulver bei hoher Temperatur in ein ringförmiges Werkzeug erzeugt werden (Pulververbund-Material). Hierbei werden die Einzel- und Koppelringkerne bei hoher Temperatur zu einer Keramik gesintert.

Es versteht sich, dass die beschriebenen Wandlervorrichtungen bzw. die Spulenanordnungen bidirektional eingesetzt werden können.

**Patentansprüche**

1. Wandlervorrichtung mit einem Wandler und mit einer Spulenanordnung (1, 2, 3, 4, 31) enthaltend eine Anzahl von Spulen,

- wobei die Spulenanordnung (1, 2, 3, 4, 31) eine Mehrzahl von miteinander gekoppelten Spulen aufweist, wobei den Spulen jeweils mindestens ein Ringkern (11, 11', 16, 16', 13, 13', 14, 14') aus einem weichmagnetischen Material zugeordnet ist,
- wobei ein Koppelringkern (11, 11', 16, 16') mit einer Kernöffnung (12, 12', 15, 15') vorgesehen ist, durch die mindestens zwei Wicklungen (8, 9, $38_1$, $38_2$, $38_{n-1}$, $38_n$) unterschiedlicher Spulen geführt gelagert sind,
- wobei eine Steuer-/Regeleinrichtung mit einem Stromregler vorgesehen ist, der auf die Spulen derart einwirkt, dass Gleichstromanteile von durch die Wicklungen (8, 9) der Spulen fließenden Ströme ($i_1$, $i_2$... $i_n$) sich ausgleichen, **dadurch gekennzeichnet, dass** mindestens die Wicklung (8, 9) einer Spule, deren Wicklung (8, 9) durch die Kernöffnung (12, 12', 15, 15') des Koppelringkerns (11, 11', 16, 16') geführt gelagert ist, durch eine Kernöffnung eines Einzelringkernes (13, 13', 14, 14') geführt gelagert ist.

2. Wandlervorrichtung nach Anspruch 1, **dadurch gekennzeichnet, dass** die Spulenanordnung (1, 2, 3, 4, 31) einem Wandler (28) nach- oder vorgeschaltet ist und dass der Wandler (28) als ein Gleichrichter oder als ein Wechselrichter ausgebildet ist.

3. Wandlervorrichtung nach Anspruch 1 oder 2, **dadurch gekennzeichnet, dass** die Wandlervorrichtung mehrphasig ausgebildet ist und einen Spannungszwischenkreis (27) aufweist, dem die Spulenanordnung (31) lastseitig nachgeschaltet ist, und dass lastseitige Anschlüsse der Spulen gesondert mit unterschiedlichen Anschlüssen (32, 33, 34) einer nachgeordneten Einheit (29) der Wandlervorrichtung verbunden sind.

4. Wandlervorrichtung nach Anspruch 1 oder 2, **dadurch gekennzeichnet, dass** die Spulenanordnung (1, 2, 3, 4, 31) in einer Wandlervorrichtung mit einem Stromzwischenkreis oder in einer Z-Source-Wandlervorrichtung integriert ist.

5. Wandervorrichtung nach einem der Ansprüche 1 bis 4, **dadurch gekennzeichnet, dass** der Koppelringkern (11, 11', 16, 16') und der Einzelringkern (13, 14) aus einem weichmagnetischen nanokristallinen Material bestehen.

6. Wandlervorrichtung nach einem der Ansprüche 1 bis 5, **dadurch gekennzeichnet, dass** eine erste Wicklung (8) und eine zweite Wicklung (9) durch die Kernöffnung der jeweils zugeordneten Einzelringkerne (13, 13', 14, 14') geführt gelagert sind und dass der Gleichanteil des durch die erste Wicklung (8) fließenden ersten Stroms ($i_1$) betragsmäßig gleich oder betragsmäßig mit einer Abweichung von maximal 30 % und entgegengesetzt gerichtet ist zu dem durch die zweite Wicklung (9) fließenden zweiten Stroms ($i_2$).

7.  Wandlervorrichtung nach einem der Ansprüche 1 bis 6, **dadurch gekennzeichnet, dass** die erste Wicklung (8) und die zweite Wicklung (9) in einer gemeinsamen Kernöffnung (12, 12', 15, 15') von mehreren Koppelringkernen (11, 11', 16, 16') angeordnet sind.

8.  Wandlervorrichtung nach einem der Ansprüche 1 bis 7, **dadurch gekennzeichnet, dass** nur die erste Wicklung (8) in der Kernöffnung des Einzelringkernes (13, 13') angeordnet ist.

9.  Wandlervorrichtung nach einem der Ansprüche 1 bis 8, **dadurch gekennzeichnet, dass** die erste Wicklung (8) als erste Spule an einem ersten Schaltzweig (6), dass die zweite Wicklung (9) als zweite Spule an einem zweiten Schaltzweig (7) einer Spannungsreglerschaltung und jeweils ein weiterer Anschluss der ersten Wicklung (8) und der zweiten Wicklung (9) miteinander verbunden sind.

10.  Wandlervorrichtung nach einem der Ansprüche 1 bis 9, **dadurch gekennzeichnet, dass** die erste Wicklung (8) und die zweite Wicklung (9) jeweils zwischen Schaltern (T1, T2, T3, T4) der Schaltungszweige (6, 7) angeschlossen sind.

11.  Wandlervorrichtung nach einem der Ansprüche 1 bis 10, **dadurch gekennzeichnet, dass** der Koppelringkern (11, 11', 16, 16') und der Einzelringkern (13, 13', 14, 14') aus einem weichmagnetischen Band gewickelt ist und eine in sich homogene Permeabilitätsverteilung aufweisen, wobei der Koppelringkern (11, 11', 16, 16') als ein Koppelringbandkern und der Einzelringkern (13, 13', 14, 14') als ein Einzelringbandkern ausgebildet ist.

12.  Wandlervorrichtung nach Anspruch 11, **dadurch gekennzeichnet, dass** der Koppelringbandkern (11, 11', 16, 16') und der Einzelringbandkern (13, 13', 14, 14') aus einer nanokristallinen eisenbasierten Legierung bestehen.

13.  Wandlervorrichtung nach Anspruch 11 oder 12, **dadurch gekennzeichnet, dass** das Band des Koppelringbandkernes (11, 11', 16, 16') und des Einzelringbandkernes (13, 13', 14, 14') wärmebehandelt ist, wobei in Längsrichtung eine solche Zugkraft einwirkt, dass sich die gewünschte Permeabilität des Bandes einstellt.

14.  Wandlervorrichtung nach einem der Ansprüche 6 bis 13, **dadurch gekennzeichnet, dass** der ersten Wicklung (8) kein Einzelringkern zugeordnet ist, dass der zweiten Wicklung (9) ein Einzelringkern (14) zugeordnet ist und dass die zweite Wicklung (9) stromlos oder stromdurchflossen schaltbar ist, so dass eine Induktivität (L1) der ersten Wicklung (8) veränderbar ist zwischen einer ersten Induktivität, in der die zweite Wicklung (9) offen ist, und einer zweiten Induktivität, in der die zweite Wicklung (9) stromdurchflossen ist.

15.  Wandlervorrichtung nach Anspruch 12 oder 13, **dadurch gekennzeichnet, dass** der nanokristalline Koppelringbandkern (11, 11', 16, 16') und/oder der Einzelringbandkern (13, 13', 14, 14') eine relative Permeabilität von $\mu_r$ kleiner als 100 aufweist.

## Claims

1.  A converter device comprising a converter and a coil arrangement (1, 2, 3, 4, 31) including a number of coils,

    wherein the coil arrangement (1, 2, 3, 4, 31) has a plurality of coils coupled to one another,
    wherein each of the coils is assigned at least one toroid core (11, 11', 16, 16', 13, 13', 14, 14') made of a soft magnetic material,
    wherein a coupling toroid core (11, 11', 16, 16') with a core opening (12, 12', 15, 15') is provided, through and in which the at least two windings (8, 9, $38_1$, $38_2$, $38_{n-1}$, $38_n$) of different coils are passed and supported,
    wherein a controlling/regulating system with a current regulator is provided, said current regulator acting upon the coils such that the direct current portions are equalized by the currents ($i_1$, $i_2$...$i_n$) flowing through the windings (8, 9) of the coils, **characterized in that**
    at least the winding (8, 9) of a coil having winding (8, 9) which is passed through and supported in the core opening (12, 12', 15, 15') of the coupling toroid core (11, 11', 16, 16') is passed through and supported in a core opening of a single toroid core (13, 13', 14, 14').

2.  The converter device according to Claim 1, **characterized in that**
    the coil arrangement (1, 2, 3, 4, 31) is connected downstream or upstream of a converter (28) and **in that** the converter (28) is designed as a rectifier or as an inverter.

3.  The converter device according to Claim 1 or 2, **characterized in that** the converter device is polyphasically designed and has an intermediate voltage circuit (27) downstream of which the coil arrangement (31) is connected on the load side, and **in that** terminals of the coils on the load side are separately connected to different terminals (32, 33, 34) of a downstream unit (29) of the converter device.

4. The converter device according to Claim 1 or 2, **characterized in that** the coil arrangement (1, 2, 3, 4, 31) is integrated in a converter device with a current intermediate circuit or in a Z-source converter device.

5. The converter device according to any one of Claims 1 to 4, **characterized in that** the coupling toroid core (11, 11', 16, 16') and the single toroid core (13, 14) consist of a soft magnetic nanocrystalline material.

6. The converter device according to any one of Claims 1 to 5, **characterized in that** a first winding (8) and a second winding (9) are passed through and supported in the core opening of the respectively assigned single toroid cores (13, 13', 14, 14') and **in that** the direct current portion of the first current ($i_1$) flowing through the first winding (8) is equal in absolute value or has a deviation of its absolute value of a maximum of 30% and is oppositely directed to the second current ($i_2$) flowing through the second winding (9).

7. The converter device according to any one of Claims 1 to 6, **characterized in that** the first winding (8) and the second winding (9) are arranged in a common core opening (12, 12', 15, 15') of several coupling toroid cores (11, 11', 16, 16').

8. The converter device according to any one of Claims 1 to 7, **characterized in that** only the first winding (8) is arranged in the core opening of the single toroid core (13, 13').

9. The converter device according to any one of Claims 1 to 8, **characterized in that** the first winding (8) is connected as a first coil at a first circuit branch (6), the second winding (9) is connected as a second coil at a second circuit branch (7) of a voltage regulator circuit, and a further terminal of the first winding (8) and the second winding (9) respectively are connected to each other.

10. The converter device according to any one of Claims 1 to 9, **characterized in that** the first winding (8) and the second winding (9) are each respectively connected between switches (T1, T2, T3, T4) of the circuit branches (6, 7).

11. The converter device according to any one of Claims 1 to 10, **characterized in that** the coupling toroid core (11, 11', 16, 16') and the single toroid core (13, 13', 14, 14') are wound from a soft magnetic strip and have an inherently homogeneous permeability distribution, wherein the coupling toroid core (11, 11', 16, 16') is designed as a coupling toroid tape core and the single toroid core (13, 13', 14, 14') is designed as a single toroid tape core.

12. The converter device according to Claim 11, **characterized in that** the coupling toroid tape core (11, 11', 16, 16') and the single toroid tape core (13, 13', 14, 14') consist of a nanocrystalline alloy.

13. The converter device according to Claim 11 or 12, **characterized in that** the tape of the coupling toroid tape core (11, 11', 16, 16') and of the single toroid tape core (13, 13', 14, 14') is heat-treated, wherein, in the longitudinal direction, a tensile force acts such that the desired permeability of the tape is established.

14. The converter device according to any one of Claims 6 to 13, **characterized in that** no single toroid core is assigned to the first winding (8), **in that** one single toroid core (14) is assigned to the second winding (9), and **in that** the second winding (9) is switchable so as to be not energized or energized, such that an inductance (L1) of the first winding (8) is variable between a first inductance in which the second winding (9) is open and a second inductance in which the second winding (9) is energized.

15. The converter device according to Claim 12 or 13, **characterized in that** the nanocrystalline coupling toroid tape core (11, 11', 16, 16') and/or the single toroid tape core (13, 13', 14, 14') have a relative permeability of $\mu_r$ smaller than 100.

**Revendications**

1. Dispositif convertisseur, avec un convertisseur et avec un arrangement de bobines (1, 2, 3, 4, 31) contenant une pluralité de bobines,

   - sachant que l'arrangement de bobines (1, 2, 3, 4, 31) présente une pluralité de bobines couplées les unes avec les autres, sachant qu'à chacune des bobines est associé au moins un noyau toroïdal (11, 11', 16, 16', 13, 13', 14, 14') en matériau magnétique doux,

- sachant qu'est prévu un noyau toroïdal de couplage (11, 11', 16, 16') doté d'une ouverture de noyau (12, 12', 15, 15'), à travers laquelle les aux moins deux enroulements (8, 9, $38_1$, $38_2$, $38_{n-1}$, $38_n$) de différentes bobines sont introduits,

- sachant qu'est prévu un dispositif de commande / régulation avec un régulateur de courant qui agit sur les bobines de manière à ce que des portions de flux de courant continu ($i_1$, $i_2$,... $i_n$), qui traversent les enroulements (8, 9) des bobines, se compensent,

**caractérisé en ce que**

au moins l'enroulement (8, 9) d'une bobine, dont l'enroulement (8, 9) est introduit à travers l'ouverture de noyau (12, 12', 15, 15') du noyau toroïdal de couplage (11, 11', 16, 16'), est introduit en passant à travers une ouverture de noyau d'un noyau toroïdal individuel (13, 13', 14, 14').

2. Dispositif convertisseur selon la revendication 1, **caractérisé en ce que** l'arrangement de bobines (1, 2, 3, 4, 31) est connecté en aval ou en amont d'un convertisseur (28) et que le convertisseur (28) est réalisé sous la forme d'un redresseur ou d'un onduleur.

3. Dispositif convertisseur selon revendication 1 ou 2, **caractérisé en ce que** le dispositif convertisseur est de conception polyphasée et présente un circuit intermédiaire de tension (27), en aval duquel l'arrangement de bobines (31) est connecté, côté de charge, et que des raccords de bobines, côté de charge, sont reliés séparément à des raccords différents (32, 33, 34) d'une unité (29) du dispositif convertisseur disposée en aval.

4. Dispositif convertisseur selon revendication 1 o u 2, **caractérisé en ce que** l'arrangement de bobines (1, 2, 3, 4, 31) est intégré dans un dispositif convertisseur avec un circuit intermédiaire de courant ou un dispositif convertisseur source Z.

5. Dispositif convertisseur selon l'une des revendications 1 à 4, **caractérisé en ce que** le noyau toroïdal de couplage (11, 11', 16, 16') et le noyau toroïdal individuel (13, 14) consistent en un matériau nanocristallin, magnétique doux.

6. Dispositif convertisseur selon l'une des revendications 1 à 5, **caractérisé en ce qu'**un premier enroulement (8) et un deuxième enroulement (9) sont introduits en passant à travers l'ouverture des noyaux toroïdaux individuels (13, 13', 14, 14') respectivement associés et que la même portion du premier flux de courant ($i_1$), qui passe à travers le premier enroulement (8) est égal ou diffère au maximum de 30 % de celle du deuxième flux de courant ($i_2$), qui passe à travers le deuxième enroulement (9), et qu'il est dirigé à l'opposé de celui-ci.

7. Dispositif convertisseur selon l'une des revendications 1 à 6, **caractérisé en ce que** le premier enroulement (8) et le deuxième enroulement (9) sont disposés dans une ouverture de noyau commune (12, 12', 15, 15') de plusieurs noyaux toroïdaux de couplage (11, 11', 16, 16').

8. Dispositif convertisseur selon l'une des revendications 1 à 7, **caractérisé en ce que** seul le premier enroulement (8) est disposé dans l'ouverture de noyau du noyau toroïdal individuel (13, 13').

9. Dispositif convertisseur selon l'une des revendications 1 à 8, **caractérisé en ce que** le premier enroulement (8) en tant que première bobine sur une première branche de commutation (6), le deuxième enroulement (9) en tant que deuxième bobine sur une deuxième branche de commutation (7) d'un circuit de commutation régulateur de courant et respectivement un autre raccordement du premier enroulement (8) et du deuxième enroulement (9) sont reliés ensemble.

10. Dispositif convertisseur selon l'une des revendications 1 à 9, **caractérisé en ce que** le premier enroulement (8) et le deuxième enroulement (9) sont raccordés respectivement entre des commutateurs (T1, T2, T3, T4) des branches de commutation (6, 7).

11. Dispositif convertisseur selon l'une des revendications 1 à 10, **caractérisé en ce que** le noyau toroïdal de couplage (11, 11', 16, 16') et le noyau toroïdal individuel (13, 13', 14, 14') sont enroulés à partir d'une bande magnétique douce et présentent une répartition de perméabilité homogène, sachant que le noyau toroïdal de couplage (11, 11', 16, 16') est réalisé en forme de noyau toroïdal de couplage à bande et le noyau toroïdal individuel (13, 13', 14, 14') en forme de noyau toroïdal individuel à bande.

12. Dispositif convertisseur selon la revendication 11, **caractérisé en ce que** le noyau toroïdal de couplage (11, 11', 16, 16') et le noyau toroïdal individuel (13, 13', 14, 14') consistent en un alliage à base de fer nanocristallin.

13. Dispositif convertisseur selon revendication 11 ou 12, **caractérisé en ce que** la bande du noyau toroïdal de couplage (11, 11', 16, 16') et du noyau toroïdal individuel (13, 13', 14, 14') est traitée à chaud, sachant que, dans le sens longitudinal, agit une force de traction telle que la bande présente la perméabilité désirée.

**14.** Dispositif convertisseur selon l'une des revendications 6 à 13, **caractérisé en ce qu'**au premier enroulement (8) n'est associé aucun noyau toroïdal individuel, qu'au deuxième enroulement (9) est associé un noyau toroïdal individuel (14) et que le deuxième enroulement (9) peut être commuté exempt de courant ou traversé pas courant de manière à ce qu'une inductance (L1) du premier enroulement (8) puisse être modifiée entre une première inductance, dans le cas de laquelle le deuxième enroulement (9) est ouvert, et une deuxième inductance, dans le cas de laquelle le deuxième enroulement (9) est traversé par le courant.

**15.** Dispositif convertisseur selon revendications 12 o u 13, **caractérisé en ce que** le noyau toroïdal de couplage (11, 11', 16, 16') nanocristallin et / ou le noyau toroïdal individuel (13, 13', 14, 14') présentent une perméabilité relative de $\mu_r$ inférieure à 100.

**Fig. 1**

**Fig. 2**

**Fig. 3**

**Fig. 4**

**Fig. 5**

Fig. 6

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012206225 A1
- DE 10161907 A1
- DE 3030225 A1
- DE 102012109420 A9
- US 20110279212 A1
- DE 102013202712 A1